# EUROPEAN PATENT APPLICATION

(11) **EP 1 674 185 A1**
(43) Date of publication of application: **28.06.2006**
(21) Application number: 05112680.3
(22) Date of filing: 21.12.2005
(51) Int. Cl.: B23F 1/08, B23Q 39/00, F16D 3/06

(54) **Method of manufacturing a splined member having a coating of a material applied thereto**

(30) Priority: 22.12.2004 US 638771 P
(71) Applicant: DANA CORPORATION, Toledo, OH 43615 (US)
(72) Inventor: Keller, Thomas, Bristol, Virginia 24201-2062 (US)
(74) Representative: Franzolin, Luigi

(57) **Abstract**

A method of manufacturing a splined member having a coating of a material applied thereto minimizes the amount of undesirable backlash and broken back when the splined member is assembled with another splined member, such as to form a slip joint. A first splined member, such as a male splined slip yoke shaft having a coating of a low friction material, is provided having splines that include major diameter portions and side portions. The first splined member is supported on an apparatus including a turning tool and a broaching tool. The turning tool is initially operated to engage and remove portions of the coating provided on the major diameter portions of the splines of the splined member. Then, the broaching tool is operated to engage and remove portions of the coating provided on the side portions of the splines of the splined member. As a result, when the first splined member is assembled with a corresponding second splined member to form a slip joint, the amount of broken back and backlash therebetween is minimized.

## Description

### BACKGROUND OF THE INVENTION

This invention relates in general to methods of manufacturing a splined member having a coating of a material applied thereto. In particular, this invention relates to an improved method of manufacturing a splined member having a coating of a material applied thereto that minimizes the amount of undesirable backlash and broken back when the splined member is assembled with another splined member, such as to form a slip joint.

Drive train systems are widely used for generating power from a source and for transferring such power from the source to a driven mechanism. Frequently, the source generates rotational power, and such rotational power is transferred from the source to a rotatably driven mechanism. For example, in most land vehicles in use today, an engine/transmission assembly generates rotational power, and such rotational power is transferred from an output shaft of the engine/transmission assembly through a driveshaft assembly to an input shaft of an axle assembly so as to rotatably drive the wheels of the vehicle. To accomplish this, a typical driveshaft assembly includes a hollow cylindrical driveshaft tube having a pair of end fittings, such as a pair of tube yokes, secured to the front and rear ends thereof. The front end fitting forms a portion of a front universal joint that connects the output shaft of the engine/transmission assembly to the front end of the driveshaft tube. Similarly, the rear end fitting forms a portion of a rear universal joint that connects the rear end of the driveshaft tube to the input shaft of the axle assembly. The front and rear universal joints provide a rotational driving connection from the output shaft of the engine/transmission assembly through the driveshaft tube to the input shaft of the axle assembly, while accommodating a limited amount of angular misalignment between the rotational axes of these three shafts.

Not only must a typical drive train system accommodate a limited amount of angular misalignment between the source of rotational power and the rotatably driven device, but it must also typically accommodate a limited amount of relative axial movement therebetween. For example, in most vehicles, a small amount of relative axial movement frequently occurs between the engine/transmission assembly and the axle assembly when the vehicle is operated. To address this, it is known to provide a slip joint in the driveshaft assembly. A typical slip joint includes first and second members that have respective structures formed thereon that cooperate with one another for concurrent rotational movement, while permitting a limited amount of axial movement to occur therebetween.

A typical sliding spline type of slip joint includes male and female members having respective pluralities of splines formed thereon. The male member is generally cylindrical in shape and has a plurality of outwardly extending splines formed on the outer surface thereof. The male member may be formed integrally with or secured to an end of the driveshaft assembly described above. The female member, on the other hand, is generally hollow and cylindrical in shape and has a plurality of inwardly extending splines formed on the inner surface thereof. The female member may be formed integrally with or secured to a yoke that forms a portion of one of the universal joints described above. To assemble the slip joint, the male member is inserted within the female member such that the outwardly extending splines of the male member cooperate with the inwardly extending splines of the female member. As a result, the male and female members are connected together for concurrent rotational movement. However, the outwardly extending splines of the male member can slide axially relative to the inwardly extending splines of the female member to allow a limited amount of relative axial movement to occur between the engine/transmission assembly and the axle assembly of the drive train system.

As is well known in the art, either or both of the male and female splined members may be coated with a material having a relatively low coefficient of friction. The low friction coating is provided to minimize the amount of force that is necessary to effect relative axial movement between the male and female splined members. In addition, the low friction coating is provided to minimize the amount of undesirable looseness between the cooperating splines of the male and female splined members. Looseness that occurs in the rotational direction of the splined members, wherein one of the splined members can rotate relative to the other splined member, is referred to as backlash. Looseness that occurs in the axial direction of the splined members, wherein one of the splined members can extend at a cantilevered angle relative to the other splined member, is referred to as broken back.

Although slip joints that have been manufactured in accordance with known methods have functioned satisfactorily, it has been found that undesirably large gaps can still exist between adjacent splines formed on the cooperating members of the slip joint, even after the coating of the low friction material has been applied. These gaps can occur as a result of manufacturing tolerances in the formation of the splines of the male and female members and can result in an undesirable amount of backlash and broken back therebetween. Thus, it would be desirable to provide an improved method of manufacturing a splined member having a coating of a material applied thereto that minimizes the amount of undesirable backlash and broken back when the splined member is assembled with another splined member, such as to form a slip joint.

### SUMMARY OF THE INVENTION

This invention relates to an improved method of manufacturing a splined member having a coating of a material applied thereto that minimizes the amount of undesirable backlash and broken back when the splined member is assembled with another splined member, such as to form a slip joint. A first splined member, such as a male splined slip yoke shaft having a coating of a low friction material, is provided having splines that include major diameter portions and side portions. The first splined member is supported on an apparatus including a turning tool and a broaching tool. The turning tool is initially operated to engage and remove portions of the coating provided on the major diameter portions of the splines of the splined member. Then, the broaching tool is operated to engage and remove portions of the coating provided on the side portions of the splines of the splined member. As a result, when the first splined member is assembled with a corresponding second splined member to form a slip joint, the amount of broken back and backlash therebetween is minimized.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is a schematic side elevational view of a vehicular drive train system having a slip joint including a splined member that has been manufactured in accordance with the method of this invention.

Fig. 2 is an enlarged exploded perspective view of portions of the male and female splined members of the slip joint illustrated in Fig. 1.

Fig. 3 is a perspective view of a portion of an apparatus for machining a coating provided on the male splined member in accordance with the method of this invention shown prior to commencement of such method.

Fig. 4 is a perspective view of the portion of the apparatus illustrated in Fig. 3 showing a first step in the method of this invention.

Fig. 5 is a perspective view of the portion of the apparatus illustrated in Fig. 3 showing a second step in the method of this invention.

Fig. 6 is a perspective view of the portion of the apparatus illustrated in Fig. 3 showing a third step in the method of this invention.

Fig. 7 is a perspective view of the portion of the apparatus illustrated in Fig. 3 showing a fourth step in the method of this invention.

Fig. 8 is a perspective view of the portion of the apparatus illustrated in Fig. 3 showing a fifth step in the method of this invention.

Fig. 9 is a perspective view of the portion of the apparatus illustrated in Fig. 3 showing a sixth step in the method of this invention.

Fig. 9A is an enlarged sectional elevational view of portions of the male splined member and the apparatus illustrated in Fig. 9.

Fig. 10 is a perspective view of the portion of the apparatus illustrated in Fig. 3 showing a seventh step in the method of this invention.

Fig. 10A is an enlarged sectional elevational view of portions of the male splined member and the apparatus illustrated in Fig. 10.

Fig. 11 is a perspective view of the apparatus illustrated in Fig. 3 showing an eighth step in the method of this invention.

Fig. 12 is a perspective view of the portion of the apparatus illustrated in Fig. 3 showing a ninth step in the method of this invention.

Fig. 13 is a perspective view of the portion of the apparatus illustrated in Fig. 3 showing a tenth step in the method of this invention.

Fig. 14 is a perspective view of the portion of the apparatus illustrated in Fig. 3 showing an eleventh step in the method of this invention.

### DETAILED DESCRIPTION OF THE PREFERRED EMBODIMENT

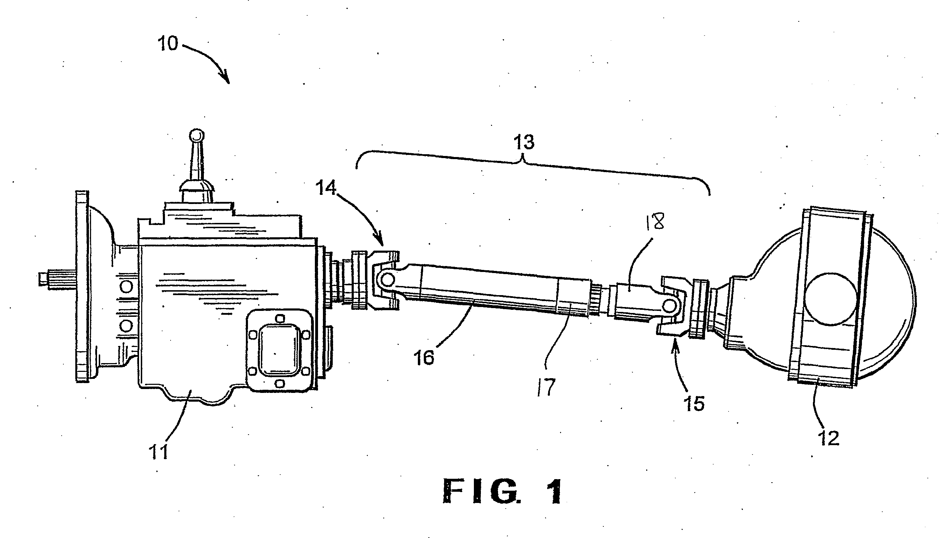

Referring now to the drawings, there is illustrated in Fig. 1 a vehicle drive train system, indicated generally at 10, in accordance with this invention. The illustrated vehicle drive train system 10 is, in large measure, conventional in the art and is intended merely to illustrate one environment in which this invention may be used. Thus, the scope of this invention is not intended to be limited for use with the specific structure for the vehicle drive train system 10 illustrated in Fig. 1 or with vehicle drive train systems in general. On the contrary, as will become apparent below, this invention may be used in any desired environment for the purposes described below.

The illustrated vehicle drive train system 10 includes a transmission 11 having an output shaft (not shown) that is connected to an input shaft (not shown) of an axle assembly 12 by a driveshaft assembly 13. The transmission 11 and the axle assembly 12 are conventional in the art. The driveshaft assembly 13 has a first end that is connected to the output shaft of the transmission 11 by a first universal joint assembly, indicated generally at 14. The driveshaft assembly 13 has a second end that is connected to the input shaft of the axle assembly 12 by a second universal joint assembly, indicated generally at 15.

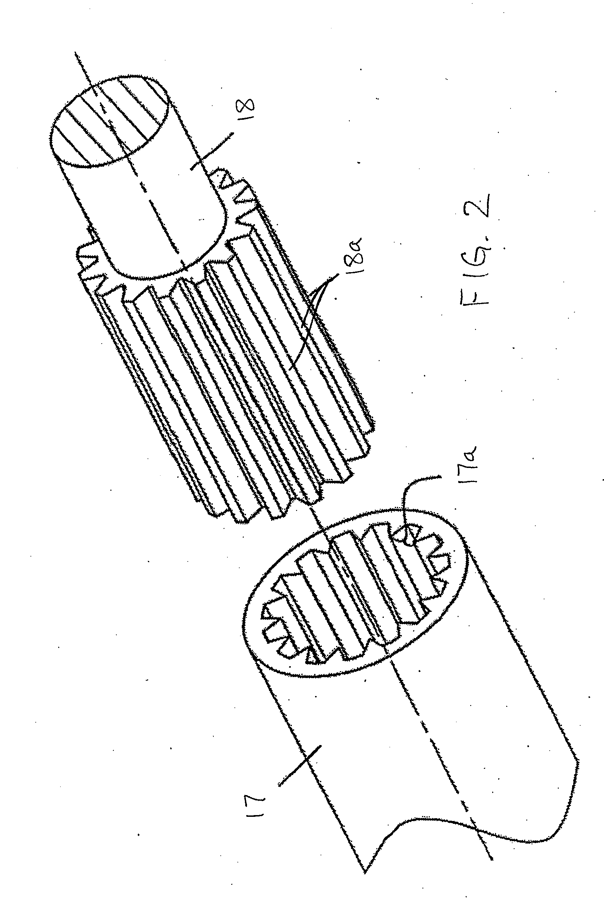

The illustrated driveshaft assembly 13 includes a hollow cylindrical driveshaft tube 16 and a hollow cylindrical slip tube 17. The driveshaft tube 16 has a first end that is connected to the first universal joint assembly 14 and a second end that is welded or otherwise secured to the slip tube 17. As best shown in Fig. 2, the slip tube 17 is formed or otherwise provided with a plurality of internal or female splines 17a. The illustrated driveshaft assembly 13 also includes a cylindrical slip yoke shaft 18. As best shown in Fig. 2, the slip yoke shaft 18 is formed or otherwise provided with a plurality of external or male splines 18a. In a manner that is well known in the art, the female splines 17a of the slip tube 17 cooperate with the male splines 18a provided on the slip yoke shaft 18 to function as a slip joint, wherein a rotational driving connection is provided between the slip tube 17 and the slip yoke shaft 18 while accommodating a limited amount of relative axial movement therebetween. The slip yoke shaft 18 also forms a part of the second universal joint assembly 15.

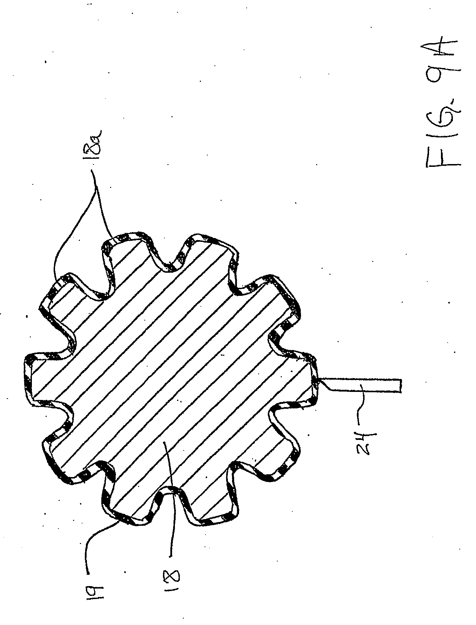

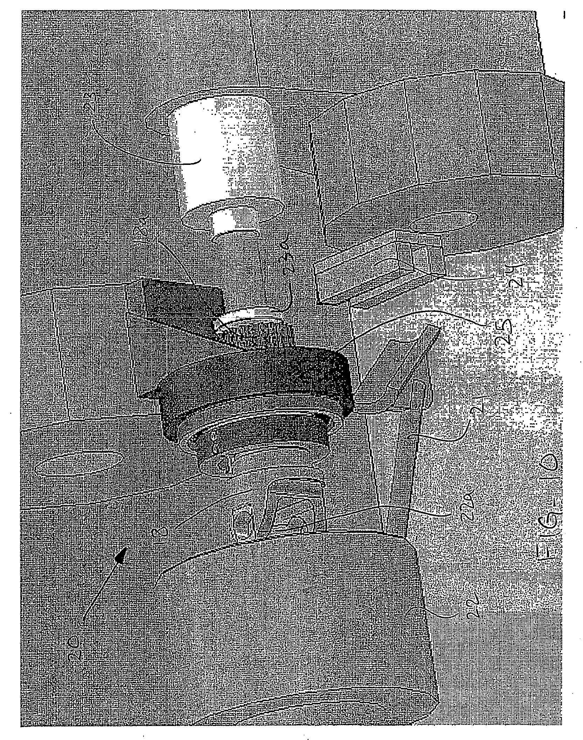

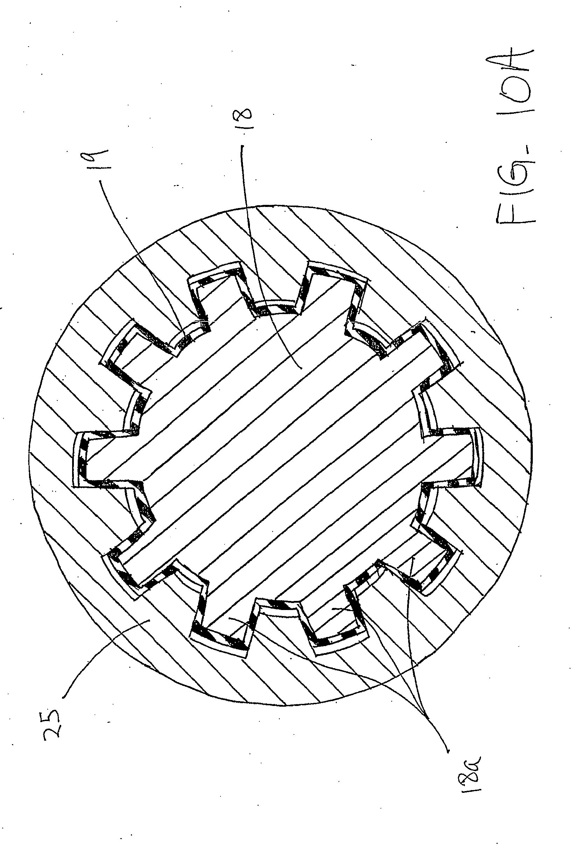

As is well known in the art, either the internal splines 17a provided on the slip tube 17 or the external splines 18a provided on the slip yoke shaft 18 (or both, if desired) may be provided with a coating 19 (see Figs. 9A and 10A) of a material having a relatively low coefficient of friction. In the illustrated embodiment, the coating 19 is provided on the external splines 18a of the slip yoke shaft 18. The coating 19 may be formed from any desired material and may be applied to the internal splines 17a provided on the slip tube 17 or the external splines 18a provided on the slip yoke shaft 18 in any desired manner.

As discussed above, the low friction coating 19 is provided to minimize the amount of force that is necessary to effect relative axial movement between the internal splines 17a provided on the slip tube 17 and the external splines 18a provided on the slip yoke shaft 18. In addition, the low friction coating 19 minimizes the amount of undesirable looseness between the cooperating splines 17a and 18a of these female and male splined members 17 and 18, respectively. As previously mentioned, looseness that occurs in the rotational direction of the splined members 17 and 18, wherein one of the splined members can rotate relative to the other splined member, is referred to as backlash. Looseness that occurs in the axial direction of the splined members 17 and 18, wherein one of the splined members can extend at a cantilevered angle relative to the other splined member, is referred to as broken back. Generally speaking, this invention contemplates that the coating 19 provided on one of the splined members be precisely machined in accordance with the shape of the other of the splined members so as to minimize the amount of undesirable backlash and broken back between the female and male splined members 17 and 18 when assembled to form the slip joint.

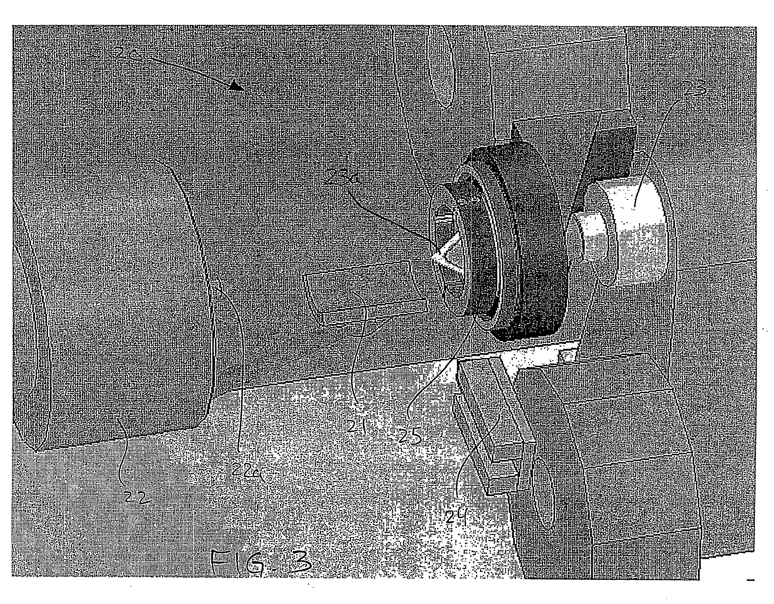

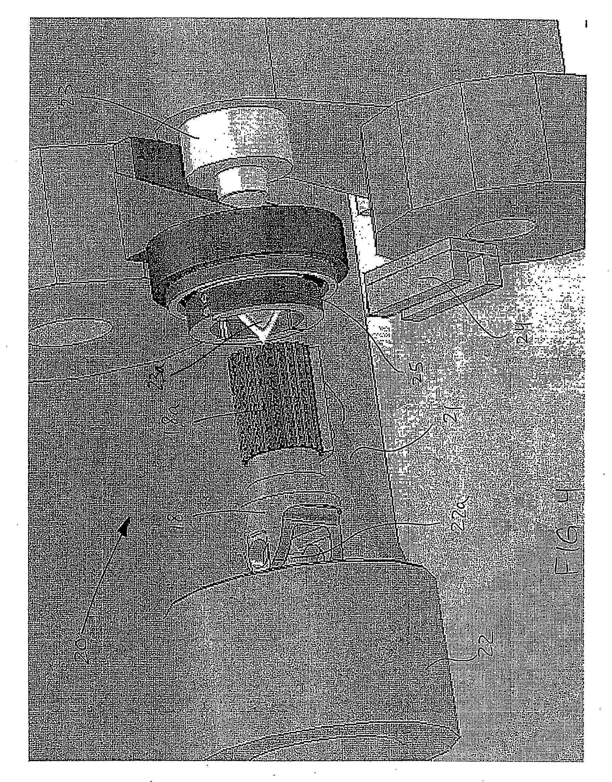

Fig. 3 illustrates a portion of an apparatus, indicated generally at 20, for machining the coating 19 provided on the external splines 18a of the slip yoke shaft 18 in accordance with the method of this invention. The illustrated apparatus 20 is a conventional lathe that includes a support cradle 21, a spindle 22, and a tail stock 23. The spindle 22 and the tail stock 23 include respective workpiece-supporting centers 22a and 23a that are conventional in the art. The centers 22a and 23a of the spindle 22 and the tail stock 23, respectively, define an axis of rotation for the apparatus 20. The spindle 22 is rotatably supported on the apparatus 20 and is connected to a motor (not shown) for selectively causing the spindle 22 to rotate in a conventional manner. The tail stock 23 is also rotatably supported on the apparatus 20, but is typically not rotatably driven by a motor. A turning tool 24 and a broaching tool 25 are also provided on the apparatus 20.

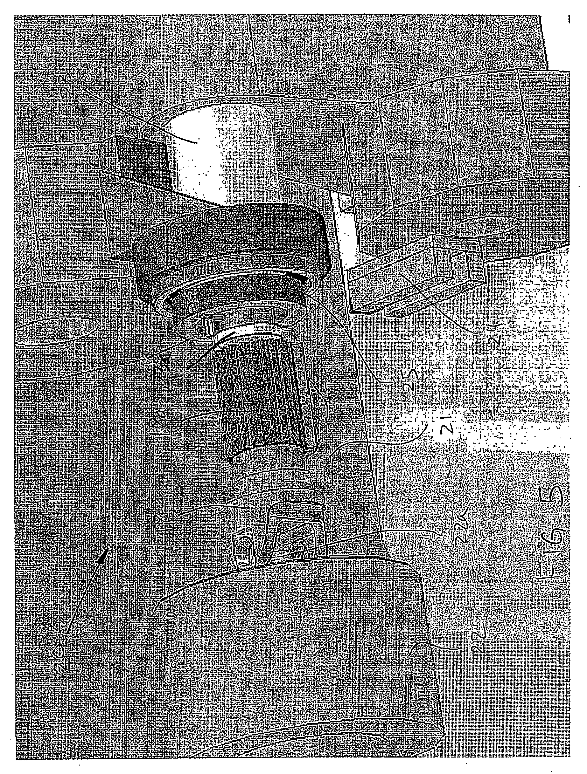

Prior to the commencement of the method of this invention, the external splines 18a provided on the slip yoke shaft 18 have already been provided with the coating 19 of the low friction material. As described above, the coating 19 may be formed from any desired material and may be applied to the external splines 18a provided on the slip yoke shaft 18 (or, alternatively, to the internal splines 17a provided on the slip tube 17) in any desired manner. Initially, as shown in Fig. 4, a workpiece, such as the slip yoke shaft 18, is supported on the support cradle 21 of the apparatus 20. Preferably, the slip yoke shaft 18 is manufactured so as to have locating recesses (not shown) formed in the axial ands thereof. These locating recesses are conventional in the art and are preferably formed precisely co-axial with the axis of rotation of the slip yoke shaft 18. When the slip yoke shaft 18 is supported on the support cradle 21, the locating recesses are approximately aligned with the centers 22a and 23a of the spindle 22 and the tail stock 23, respectively, of the apparatus 20.

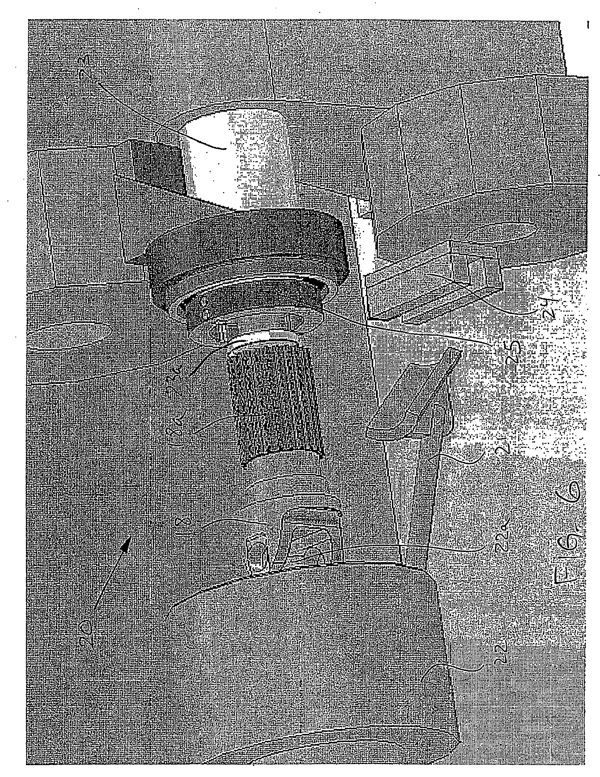

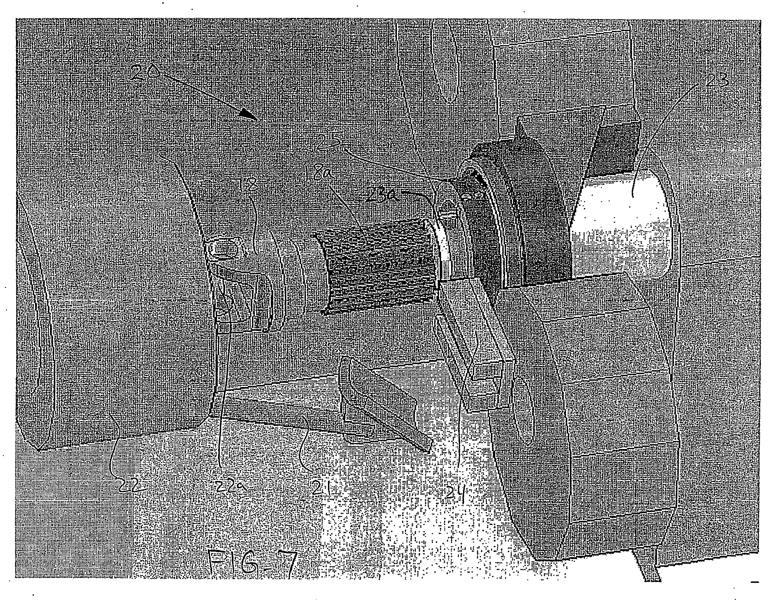

Then, as shown in Fig. 5, the tail stock 23 can be advanced axially toward the slip yoke shaft 18. When this occurs, the centers 22a and 23a of the spindle 22 and the tail stock 23, respectively, extend into the locating recesses provided on the opposed ends of the slip yoke shaft 18. As a result, the slip yoke shaft 18 is frictionally engaged between the spindle 22 and the tail stock 23 for rotation as a unit, as will be described below. At the same time, the axis of rotation of the slip yoke shaft 18 is precisely aligned with the axis of rotation defined by the centers 22a and 23a of the spindle 22 and the tail stock 23, respectively. Next, as shown in Fig. 6, the support cradle 21 is moved to a retracted position, wherein it will not interfere with subsequent operations performed by the apparatus 20.

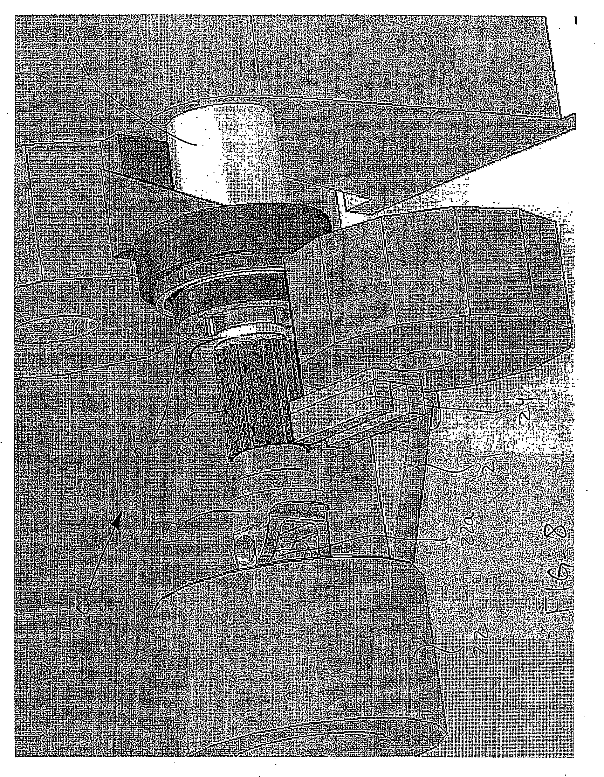

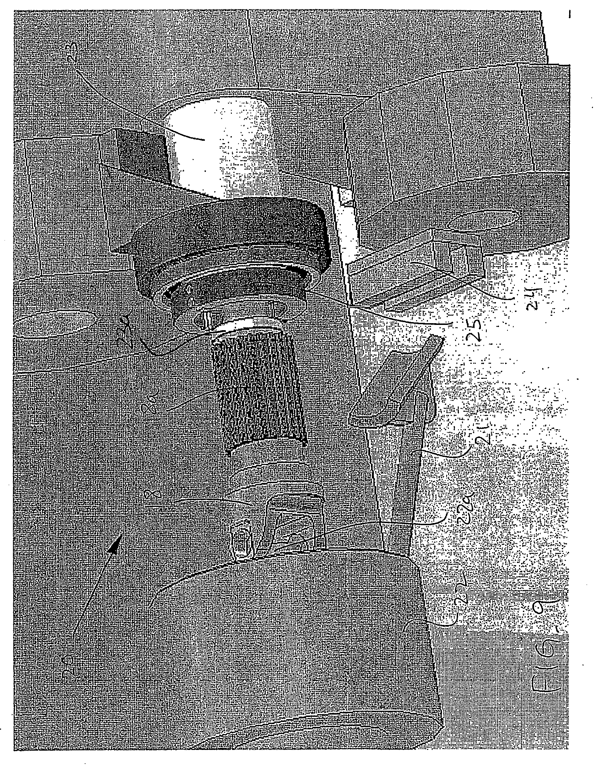

In the illustrated embodiment, the apparatus 20 is initially operated to machine the portions of the coating 19 that are applied to the outer surfaces of the major diameter portions of the male splines 18a provided on the slip yoke shaft 18. To accomplish this, the motor of the apparatus 20 is operated to rotate the spindle 22, the slip yoke shaft 18, and the tail stock 23 relative to the turning tool 24, the broaching tool 25, and the remaining portions of the apparatus 20. Then, the turning tool 24 is actuated to move from an initial retracted position radially inwardly toward the slip yoke shaft 18, as shown in Fig. 7. Then, the turning tool 24 is actuated to moved axially along the slip yoke shaft 18, as shown in Fig. 8. Such movements cause the turning tool 24 to engage and remove portions of the coating 19 that are applied to the outer surfaces of the major diameter portions of the male splines 18a provided on the slip yoke shaft 18, as best shown in Fig. 9A. As a result, the shape of the coating 19 on the outer surfaces of the major diameter portions of the male splines 18a provided on the slip yoke shaft 18 is precisely conformed to a desired shape. Once the machining of the coating 19 on the outer surfaces of the major diameter portions of the male splines 18a provided on the slip yoke shaft 18 has been completed, the turning tool 24 is returned to its initial retracted position, as shown in Fig. 10.

The precise shaping of the coating 19 on the outer surfaces of the major diameter portions of the male splines 18a on the slip yoke shaft 18 is performed so that such coating 19 will closely conform with the shape of the corresponding inner surfaces of the major diameter portions of the female splines 17a on the slip tube 17. More specifically, the coating 19 on the outer surfaces of the major diameter portions of the male splines 18a on the slip yoke shaft 18 is re-shaped so that a predetermined clearance is maintained with the corresponding inner surfaces of the major diameter portions of the female splines 17a on the slip tube 17. As a result, when the splined members 17 and 18 are assembled as shown in Fig. 1, the amount of broken back therebetween is minimized.

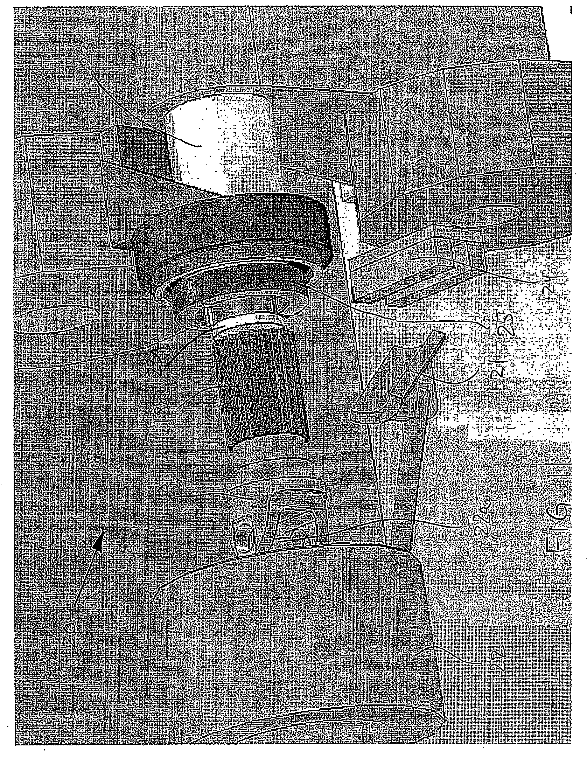

In the illustrated embodiment, the apparatus 20 is next operated to machine the portions of the coating 19 that are applied to the outer surfaces of the side portions of the male splines 18a provided on the slip yoke shaft 18. To accomplish this, the motor of the apparatus 20 is caused to stop the rotation of the spindle 22, the slip yoke shaft 18, and the tail stock 23 relative to the turning tool 24, the broaching tool 25, and the remaining portions of the apparatus 20. Then, the broaching tool 25 is actuated to move from an initial retracted position axially toward and about the slip yoke shaft 18, as shown in Fig. 10. Such movement causes the broaching tool 25 to engage and remove portions of the coating 19 that are applied to the outer surfaces of the side portions of the male splines 18a provided on the slip yoke shaft 18, as best shown in Fig. 10A. As a result, the shape of the coating 19 on the outer surfaces of the side portions of the male splines 18a provided on the slip yoke shaft 18 is precisely conformed to a desired shape. Once the machining of the coating 19 on the outer surfaces of the side portions of the male splines 18a provided on the slip yoke shaft 18 has been completed, the broaching tool 25 is returned to its initial retracted position, as shown in Fig. 11.

The precise shaping of the coating 19 on the outer surfaces of the side portions of the male splines 18a on the slip yoke shaft 18 is performed so that such coating 19 will closely conform with the shape of the corresponding inner surfaces of the side portions of the female splines 17a on the slip tube 17. More specifically, the coating 19 on the outer surfaces of the side portions of the male splines 18a on the slip yoke shaft 18 is re-shaped so that a predetermined clearance is maintained with the corresponding inner surfaces of the side portions of the female splines 17a on the slip tube 17. As a result, when the splined members 17 and 18 are assembled as shown in Fig. 1, the amount of backlash therebetween is minimized.

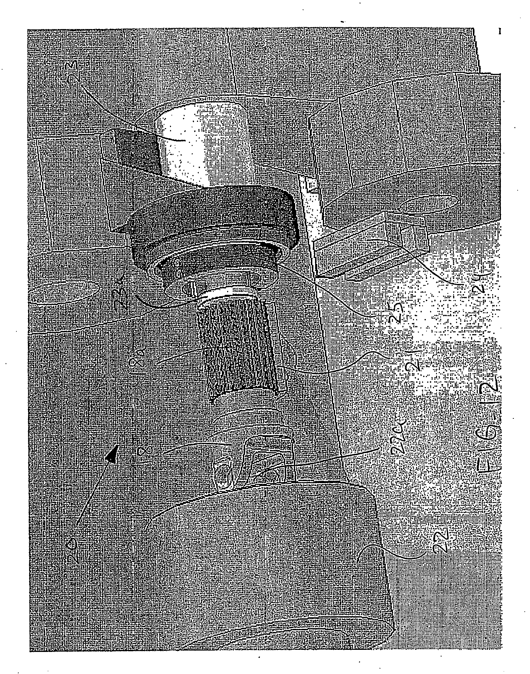

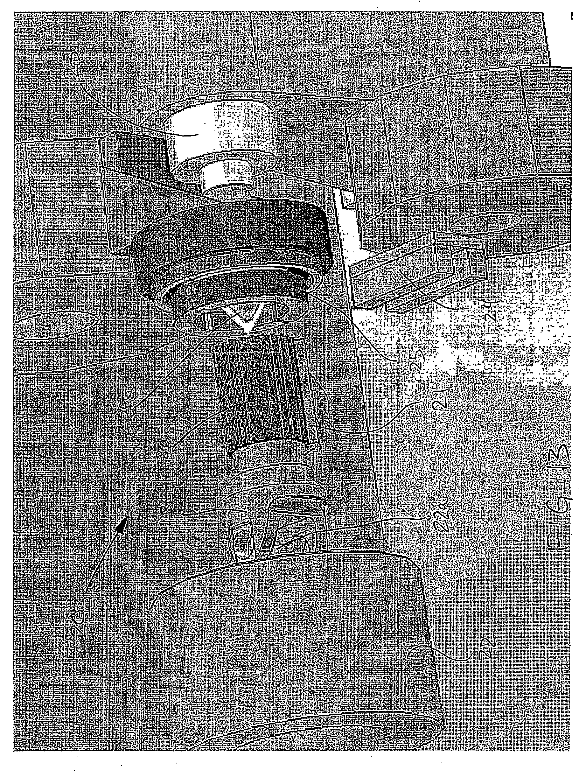

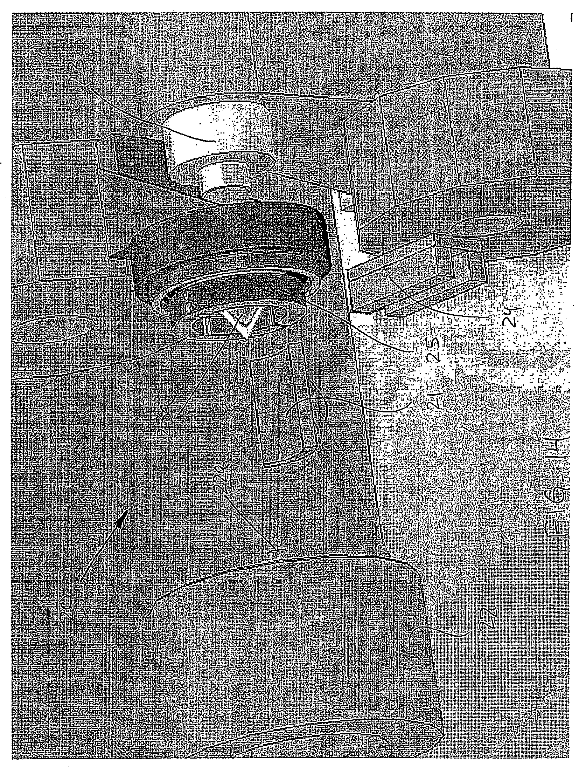

In the final steps of operation of the apparatus 20, the support cradle 21 is returned to an extended position, as shown in Fig. 12, wherein it can support the machined slip yoke shaft 18 thereon. Then, the tail stock 23 is moved axially back to its retracted position, as shown in Fig. 13, thus releasing the machined slip yoke shaft 18 from between the centers 22a and 23a of the spindle 22 and the tail stock 23, respectively. Thereafter, the machined slip yoke shaft 18 can be removed from the apparatus 20, as shown in Fig. 14, and the process can be repeated.

In the illustrated embodiment, the apparatus 20 is initially operated to machine the portions of the coating 19 that are applied to the outer surfaces of the major diameter portions of the male splines 18a provided on the slip yoke shaft 18. Thereafter, the apparatus 20 is operated to machine the portions of the coating 19 that are applied to the outer surfaces of the side portions of the male splines 18a provided on the slip yoke shaft 18. However, it will be appreciated that the two machining operations can be performed in the opposite order if desired. Furthermore, in the illustrated embodiment, the two machining operations are performed on a single apparatus 20. However, it will be appreciated that the two machining operations can be performed on two or more separate apparatuses (not shown) if desired.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A method for manufacturing a splined member having a coating comprising the steps of:
(a) providing a splined member having a coating of a material;
(b) providing a turning tool and a broaching tool;
(c) causing the turning tool to engage and remove first portions of the coating of the splined member; and
(d) causing the broaching tool to engage and remove second portions of the coating of the splined member.

2. The method defined in Claim 1 wherein said step (a) is performed by providing a male splined member having a coating of a material.

3. The method defined in Claim 1 wherein said step (b) is performed by providing an apparatus that includes both the turning tool and the broaching tool.

4. The method defined in Claim 1 wherein said step (a) is performed by providing a splined member having a coating of a material on a plurality of splines having major diameter portions, and wherein said step (c) is performed by causing the turning tool to engage and remove portions of the coating provided on the major diameter portions of the splines of the splined member.

5. The method defined in Claim 1 wherein said step (a) is performed by providing a splined member having a coating of a material on a plurality of splines having side portions, and wherein said step (d) is performed by causing the broaching tool to engage and remove portions of the coating provided on the side portions of the splines of the splined member.

6. The method defined in Claim 1 wherein said step (a) is performed by providing a splined member having a coating of a material on a plurality of splines having major diameter portions and having side portions, said step (c) is performed by causing the turning tool to engage and remove portions of the coating provided on the major diameter portions of the splines of the splined member, and said step (d) is performed by causing the broaching tool to engage and remove portions of the coating provided on the side portions of the splines of the splined member.

7. The method defined in Claim 1 including the further steps of (d) providing a second splined member and (e) assembling the first and second splined members to provide a slip joint.

8. The method defined in Claim 7 wherein the first splined member is a male splined slip yoke shaft and the second splined member is a female splined slip tube.
